(19) **Europäisches Patentamt**
**European Patent Office**
**Office européen des brevets**

(11) **EP 1 673 652 B1**

(12) **EUROPEAN PATENT SPECIFICATION**

(45) Date of publication and mention
of the grant of the patent:
**27.02.2008 Bulletin 2008/09**

(51) Int Cl.:
***G02B 27/22*** (2006.01) ***G02F 1/1335*** (2006.01)

(21) Application number: **04770136.2**

(86) International application number:
**PCT/IB2004/051928**

(22) Date of filing: **30.09.2004**

(87) International publication number:
**WO 2005/033776 (14.04.2005 Gazette 2005/15)**

(54) **OPTIMISING BRIGHTNESS CONTROL IN A 3D IMAGE DISPLAY DEVICE**

OPTIMIERUNG DER HELLIGKEITSREGELUNG IN EINER 3D-BILDANZEIGEEINRICHTUNG

OPTIMISATION DE COMMANDE DE LUMINOSITE DANS UN DISPOSITIF D'AFFICHAGE D'IMAGES 3D

(84) Designated Contracting States:
**AT BE BG CH CY CZ DE DK EE ES FI FR GB GR HU IE IT LI LU MC NL PL PT RO SE SI SK TR**

(30) Priority: **04.10.2003 GB 0323283**

(43) Date of publication of application:
**28.06.2006 Bulletin 2006/26**

(73) Proprietor: **Koninklijke Philips Electronics N.V.**
**5621 BA Eindhoven (NL)**

(72) Inventors:
• **KARMAN, G. P.,**
**Philips Intel. Prop. & Stand.**
**Redhill Surrey RH1 5HA (GB)**

• **SCHOELLMANN, V.,**
**Philips Intel. Prop. & Stand.**
**Redhill Surrey RH1 5HA (GB)**

(74) Representative: **Damen, Daniel Martijn et al**
**Philips**
**Intellectual Property & Standards**
**P.O. Box 220**
**5600 AE Eindhoven (NL)**

(56) References cited:
**EP-A- 0 897 126** **US-A1- 2001 028 356**

**Description**

The present invention relates to display devices, and in particular to display devices adapted to display three dimensional or stereoscopic images.

The generation of three-dimensional images generally requires that a display device is capable of providing a different view to the left and the right eye of a user of the display device. This can be achieved by providing a separate image directly to each eye of the user by use of specially constructed goggles. In one example, a display provides alternating left and right views in a time sequential manner, which views are admitted to a corresponding eye of the viewer by synchronised viewing goggles.

In another example, such as that described in US 6,172,807, time sequential synchronisation of left and right eye views is provided by way of a spatial modulation element in the form of an LCD panel which alternately occludes left and right eye views of a display using parallax. In order to correctly occlude left and right eye views, the system of US '807 has to constantly track the position of the viewer relative to the display device.

In contradistinction, the present invention relates to classes of display devices where different views of an image can be seen according to the viewing angle relative to a single display panel without necessarily requiring tracking of user position. Hereinafter, these will be referred to generally as 3D display devices.

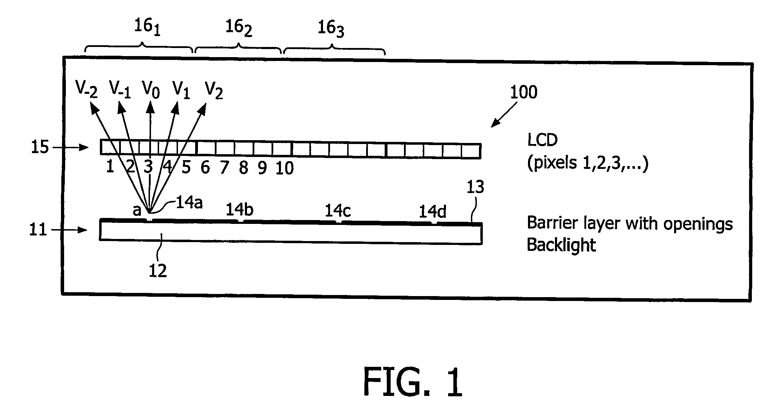

One known class of such 3D display devices is the liquid crystal display in which the parallax barrier approach is implemented. Such a system is illustrated in figure 1.

With reference to figure 1, a display device 100 of the parallax barrier type comprises a back panel 11 that provides a plurality of discrete light sources. As shown, the back panel 11 may be formed by way of an areal light source 12 (such as a photoluminescent panel) covered with an opaque mask or barrier layer 13 having a plurality of slits 14a to 14d distributed across its surface. Each of the slits 14 then acts as a line source of light.

A liquid crystal display panel (LCD) 15 comprises a plurality of pixels (eg. numbered 1 to 10 in figure 1) which are separately addressable by electrical signals according to known techniques in order to vary their respective light transmission characteristics. The back panel 11 is closely positioned with respect to the LCD panel 15 such that each of the line sources 14 of light corresponds to a group 16 of pixels. For example, pixels 1 to 5 shown as group $16_1$ correspond to slit 14a, pixels 6 to 10 shown as group $16_2$ correspond to slit 14b, etc.

Each pixel of a group 16 of pixels corresponds to one view V of a plurality of possible views ($V_{-2}$, $V_{-1}$, $V_0$, $V_1$, $V_2$) of an image such that the respective line source 14a can be viewed through one of the pixels 1 to 5 corresponding to that view. The number of pixels in each group 16 determines the number of views of an image present, which is five in the arrangement shown. The larger the number of views, the more realistic the 3D effect becomes and the more oblique viewing angles are provided.

Throughout the present specification, we shall refer to the 'image' being displayed as the overall image being generated by all pixels in the display panel, which image is made up of a plurality of 'views' as determined by the particular viewing angle.

A problem exists with this prior art arrangement. The brightness of any given discrete light source 14 as perceived by the viewer will be a function of the size of the pixel lying between the light source and the viewer in a direction orthogonal to the light beam. In other words, the angular size of view of the light source 14a as viewed through pixel 3 of figure 1 is greater than the angular size of view of light source 14a as viewed through pixel 5.

Therefore, the perceived intensity of the viewed source will be a function of viewing angle. This results in a dimmer image when viewed at more oblique angles, and therefore unwanted intensity artefacts when observing the different views of the image.

It is an object of the present invention to overcome or mitigate the unwanted intensity artefacts in a display device for displaying three dimensional images in which different views of the image are displayed according to the viewing angle.

According to one aspect, the present invention provides a display device for displaying a three dimensional image such that different views are displayed according to the viewing angle, the display device including:

a display panel having a plurality of separately addressable pixels for displaying said image, the pixels being grouped such that different pixels in a group correspond to different views of the image, each pixel in a group being positioned relative to a respective discrete light source;
a display driver for controlling an optical characteristic of each pixel to generate an image according to received image data; and
an intensity compensation device for further controlling said optical characteristic of pixels within a group to compensate for an angular size of view, of the respective light source, via said pixels.

According to another aspect, the present invention provides a method for displaying a three dimensional image on a display device such that different views of the image are displayed according to the viewing angle, the method comprising the steps of:

processing image data to form pixel intensity data values for each one of a plurality of separately addressable pixels in display panel, the pixels being grouped such that different pixels in a group correspond to different views of the image, and each pixel in a group being positioned relative to a respective discrete light source, the pixel intensity data values each for controlling an optical characteristic of a respective pixel to generate the image;
applying intensity correction values to at least some pixel data values within each group to compensate for an angular size of view, of the respective light source, via said pixels; and
using the corrected pixel data values to drive pixels of the display panel to generate said image.

Embodiments of the present invention will now be described by way of example and with reference to the accompanying drawings in which:

Figure 1 shows a schematic cross-sectional view of an existing design of LCD device that uses the parallax barrier approach to display three dimensional images;
Figure 2 shows a schematic cross-sectional diagram useful in illustrating the geometry of a parallax barrier LCD device;
Figure 3 shows a schematic diagram illustrating the angular width of each view of a light source as determined by left and right edges of pixels through which the light source is viewed;
Figure 4 shows a graph of normalised brightness as a function of pixel number for a group of pixels providing different views of an image;
Figure 5 shows a graph of brightness correction factors to be applied to each pixel of a group of pixels providing different views of an image;
Figure 6 shows a graph of width of view and angular location as a function of view number;
Figure 7 shows a schematic block diagram of a display device according to embodiments of the present invention;
Figure 8 shows an embodiment of the invention utilising a lenticular array;
Figure 9 shows an alternative form of light source suitable for use with the display device; and
Figure 10 shows a graph of viewing angle properties of a conventional liquid crystal display panel useful in illustrating display optimisation principles in accordance with the present invention.

With reference to figure 1, the basic function of a parallax barrier type, three dimensional image display device has already been described. A similar structure of display panel 15 and back panel 11 illumination source may be used in the preferred embodiment of the invention. However, it will be recognised that other configurations may be used as will become evident hereinafter.

In general, the invention uses a display panel 15 having a plurality of separately addressable pixels 1...10, in which the pixels are grouped so that the different pixels 1...5 or 6...10 respectively in a group $16_1$ and $16_2$ correspond to different views of the image. The display panel 15 may be any suitable electro-optical device in which an optical characteristic of each pixel can be varied according to an electrical control signal to generate an image. Preferably the display panel is a liquid crystal display.

An illumination source having a plurality of discrete light sources 14a ... 14d, so that each group 16 of pixels is positioned to receive light from a respective one of the light sources, is preferably provided. This may be by way of the areal light source 12 and mask 13 arrangement of figure 1, but could also be provided by way of a pixellated light source providing light sources 14 as lines of pixels, individual pixels or blocks of pixels.

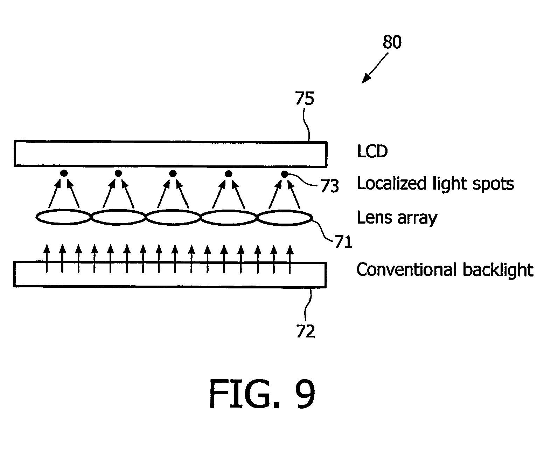

Still further, the plurality of discrete light sources could be virtual light sources provided by way of a backlight and lens array (e.g. a lenticular sheet array) providing a series of high intensity light spots. Such an arrangement is illustrated in figure 9. A display device 80 includes an LCD panel 75, areal light source 72 and a lens array 71. The lens array focuses light from the areal source 72 into a plurality of discrete focal points 73 just outside the plane of the LCD panel so that each illuminates a plurality of pixels in the LCD panel, similar to that described in connection with figure 1.

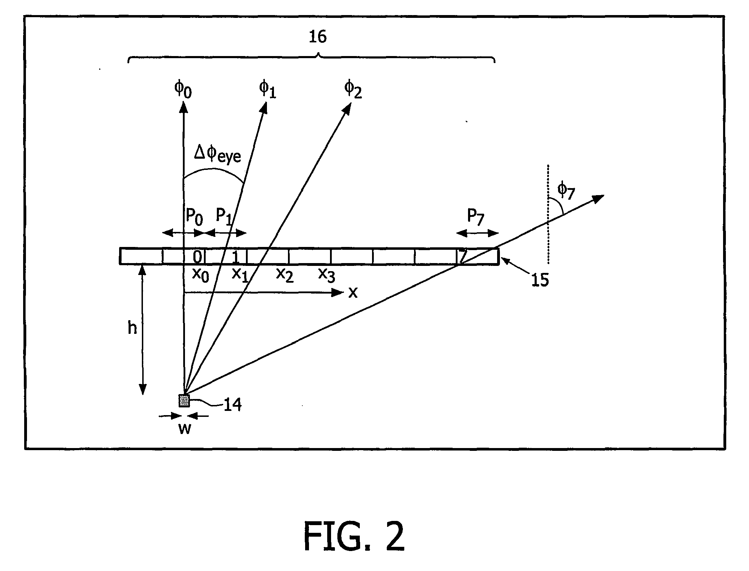

Part of a group of pixels in the display panel 15 is shown in figure 2. A light source 14 of width w corresponds with, and can be viewed through, a group of pixels 0...7 at respective viewing angles $\phi_0$, $\phi_1$, ... $\phi_7$ relative to the normal of the plane of the display panel. It will be understood that only approximately half of the pixel group 16 is shown, a further seven pixels being present to the left of pixel 0 to complete the pixel group 16.

Each pixel has a width $p_0$, $p_1$, ... $p_7$. Preferably, widths $p_0$ ... $p_7$ are equal, but they could vary in order to compensate to a certain extent for the angle of incidence of light passing therethrough. The distance between the back panel illumination source 14 and the display panel 15 is shown as h. In a preferred display device, h = 2.3 mm, $p_0$ = 200 microns, and w = 50 microns although these values may be varied significantly.

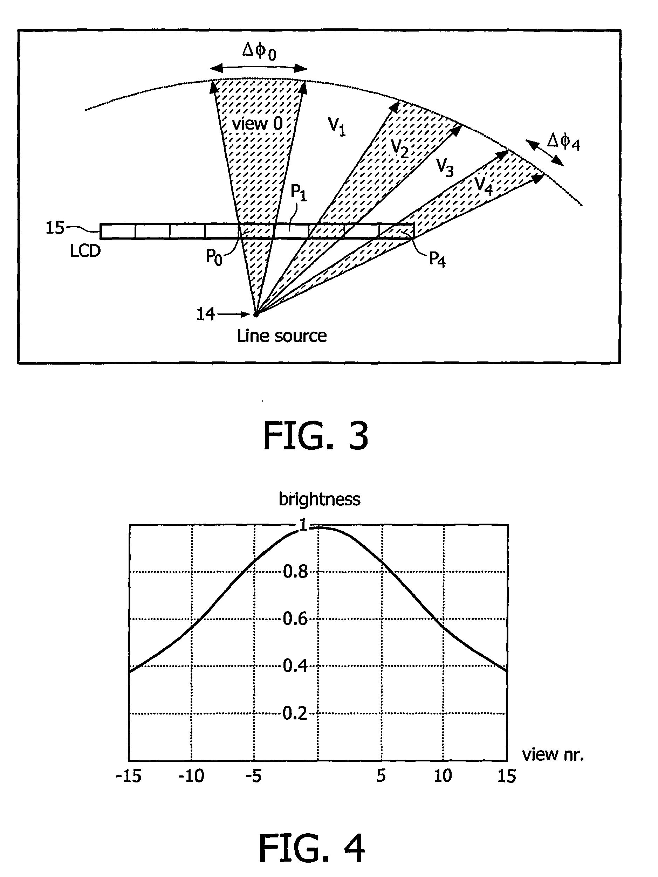

Figure 3 shows that the angular size $\Delta\phi$ of the viewing cone of each view $V_0$, $V_1$, $V_2$, $V_3$, $V_4$ becomes smaller for higher n, where n is the pixel number counting from the pixel 0 that is centred over the light source 14 (see figure 2).

This means that the brightness of each of the n views becomes less for higher values of n, assuming that the light source 14 is an isotropic emitter. This would normally be the case at least to the extend of angle subtended by the group 16 of pixels corresponding to the relevant light source 14. The observer will therefore experience a lower brightness for the more oblique views (e.g. $V_4$, $V_3$) than for the orthogonal view Vo. This results in some undesirable artefacts when observing the different views of the image being displayed.

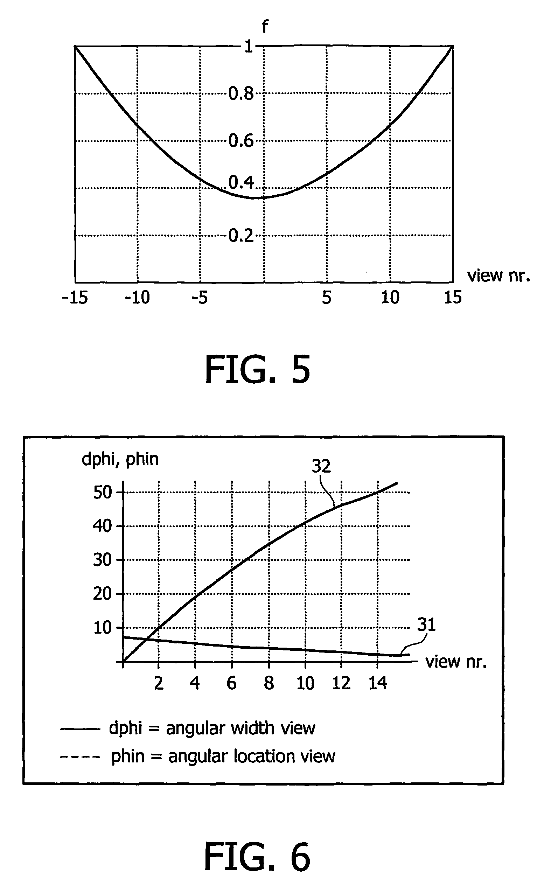

The angular position $\phi_n$ of a view n is given by $\phi_n$ = arctan ($np_0$ / h). This assumes that $p_n = p_0$ for all n (constant pixel width) such that $X_n = p_0$ / 2 + npo. This would be the case for most LCD panels, but panels having different pixel sizes could be accommodated by suitable changes. The first view $\phi_1$ at inter-eye angle $\Delta\phi_{eye}$ is given as $\phi_1$ = arctan ($p_0$ / h). The angular distance $\phi_{n+1}$- $\phi_n$ between neighbouring views is not constant. The values of $\Delta_\phi$ and $\phi_n$ as a function of view number n are illustrated in figure 6 respectively as curves 31, 32.

The expression for $\Delta\phi$ is given by:

$$\Delta\phi = \arctan\{[(n + 0.5)\, p_0 + 0.5 * w] / h\} - \arctan\{[(n - 0.5)\, p_0 - 0.5 * w] / h\}$$

The number $\Delta\phi$ determines the brightness of each view. If the light source 14 is an isotropic emitter, emitting equal intensity in all (relevant) directions, the brightness scales linearly with the angle each view subtends. If the brightness of view 0 is normalised to 1, then the brightness for each view n is given by the expression:

$$(\text{brightness view})_n = \Delta\phi_n / \Delta\phi_0$$

$$= \frac{\arctan\{[(n + 0.5)\, p_0 + 0.5 * w] / h\} - \arctan\{[(n - 0.5)\, p_0 - 0.5 * w] / h\}}{2 \arctan [(p_0 + w) / 2h]}$$

This is plotted in figure 4, normalised brightness against view number, n, for h = 2.3 mm, $p_0$ = 200 microns, w = 50 microns. It will be appreciated that in the case of an anisotropic light source 14, adjustments could be made accordingly to determine the brightness profile as a function of n.

In accordance with one presently preferred embodiment, it is proposed to modify the driving voltages and/or current of pixels of the LCD panel to at least partially compensate for the established brightness profile. Thus, the transmission of the LCD pixels in a group are individually adjusted to compensate for the brightness of the view that the pixel creates. For 2N + 1 views (views numbered from -N to +N), we provide an intensity compensation device that controls the optical characteristic of each pixel O...N and 0...-N in a group 16 so as to compensate for the viewing angle.

The intensity compensation device preferably substantially normalises an intensity of the light source 14 as displayed by a group 16 of pixels to that of the other pixels in the group for any given location in the display panel. The perceived intensity thereby becomes independent of the viewing angle. The intensity compensation device may take into account any degree of anisotropic behaviour of the light source 14.

Different intensity correction factors will be required for different display types (e.g. taking into account pixel size, LCD panel thickness, light source to display spacing etc) and for transmissive versus reflective displays.

In one preferred embodiment, the intensity compensation device applies a brightness correction factor $f_n$ for the nth pixel of a total of 2N + 1 pixels (N pixels on either side of a centre pixel n = 0 normal to the light source) according to the following expression:

$$f_n = (\text{brightness view})_N / (\text{brightness view})_n$$

therefore:

$$f_n = \frac{\arctan\{[(N + 0.5)\,p_0 + 0.5 * w] / h\} - \arctan\{[(N - 0.5)\,p_0 - 0.5 * w] / h\}}{\arctan\{[(n + 0.5)\,p_0 + 0.5 * w] / h\} - \arctan\{[(n - 0.5)\,p_0 - 0.5 * w] / h\}}$$

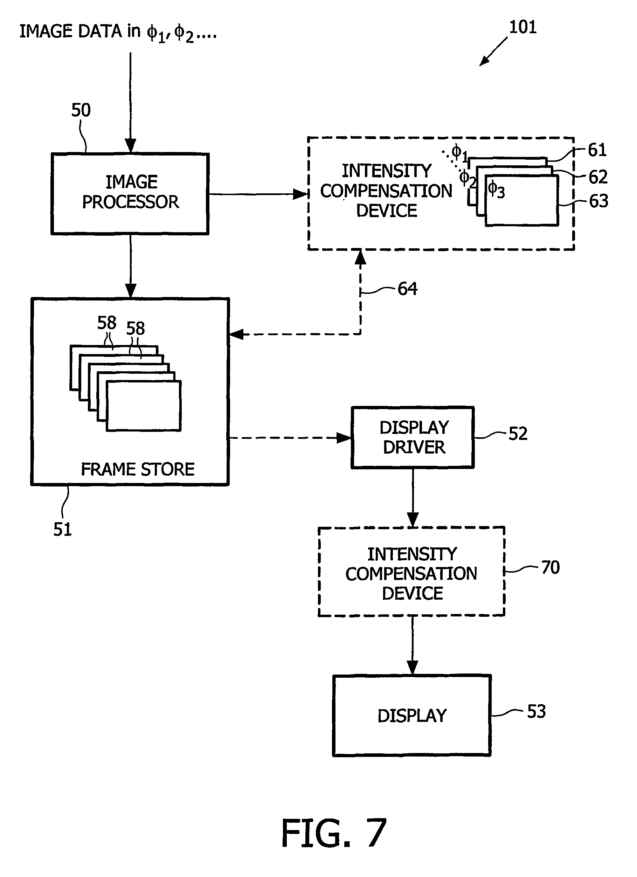

Figure 7 shows schematically exemplary embodiments of a display device 101 incorporating an intensity compensation device.

An image processor 50 receives a stream of image information including intensity pixel data for each of a plurality of views $\phi_0... \phi_7$. The image information is processed and stored into a frame buffer 51 in digital form so that it can be rendered onto a display device 53. Frame buffer 51 includes a plurality of pages 58, each page including the pixel data for a respective view, $\phi_0$, $\phi_1$, ... $\phi_7$.

The frame buffer 51 is accessed by a display driver 52 that provides appropriate drive voltage and/or current signals to each pixel of a display panel 53 in accordance with each of the stored values in frame store 51. As a general principle, it will be understood that the application of intensity correction values by the intensity compensation device can be applied either:

(i) by digitally modifying the image data stored in the frame store 51 to include a correction factor so that the value of drive parameter selected by the display driver 52 is suitably modified, or

(ii) by leaving the image data stored in the frame store 51 unmodified, but applying a correction factor to the output of the display driver 52.

In a first embodiment, an intensity compensation device 60 (shown in dashed outline) is provided as, for example a look-up table accessible by the image processor 50. The look-up table comprises a plurality of pages 61, 62, 63 of correction values, each page corresponding to one of the viewing angles $\phi_1... \phi_7$ to be applied to image data received by the image processor. The image processor 50 obtains appropriate corrections to the image data and stores this compensated data in frame store 51.

The expression 'correction values' in this context may include 'substitution' values or 'offset' values. In other words, for a given input pixel value $x_i$, the look-up tables 61 - 63 may provide a substitution value $x_s$ (as a function of $\phi$) to be stored in the frame store in place of $x_i$. Alternatively, for a given input pixel value $x_i$, the look-up tables 61 - 63 may provide an offset value $x_o$ (as a function of $\phi$) which is combined with the input value and the result $x_i + x_o$ stored in the frame store in place of $x_i$.

A particular advantage of this embodiment is that it can be implemented with very little, if any, change in hardware from a conventional LCD driver arrangement. The functions of the image processor 50 can be realised in software, and the functions of the intensity compensation device 60 can also be realised as a software implementation.

In a variation on this first embodiment, the compensation device 60 may operate independently of the image processor 50 upon data already stored in the frame store 51 by the image processor 50. This can be effected by using a second access port 64 to the frame store 51. The compensation device 60 in this embodiment may also be implemented as a software module, without interfering with the operation of the image processor 50 (for example, where this is a customised graphics processor). Again, the look-up tables 61 - 63 may provide a substitution value or an offset value to be implemented by the intensity compensation device.

In a second embodiment, it is recognised that the intensity compensation for each pixel drive signal could be carried out in real time in the analogue domain, i.e. by applying a correction voltage offset to each pixel signal produced by the display driver 52. Thus, in this embodiment, an intensity compensation device 70 is installed between the display driver 52 and the display panel 53 to apply specific offset voltages and/or currents to those output by the display driver. In this arrangement, the intensity correction values may be considered as voltage and/or current offset values.

For the sake of completeness, it is also noted that a hybrid system could deploy both techniques of digital correction values applied to the frame store 51 by compensation device 60 and analogue offsets applied to the display driver outputs by compensation device 70. An appropriate contribution would be made by both, although this may be a more complicated solution. For example, analogue offsets or correction values applied by the intensity compensation device 70 might be selected to move the operation of the display panel into an appropriate portion of a transmission-voltage characteristic, while digital correction values might be selected to compensate for differences in the slope of the transmission-voltage characteristic.

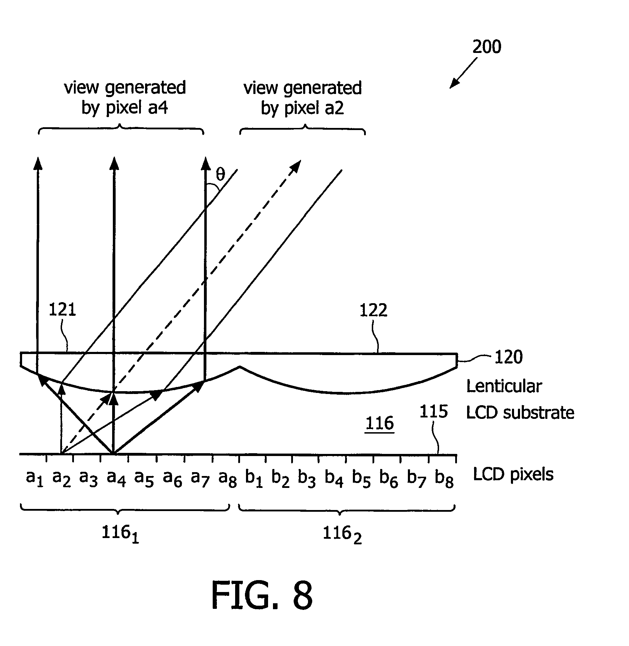

It is also noted that the intensity compensation device 60 as described herein may also be applied in other forms of 3D display other than that shown in figures 1 and 2. With reference to figure 8, it will be noted that the invention can also be applied to a lenticular 3D display device 200. In this lenticular display device, a liquid crystal display panel 115 includes a plurality of pixels ($a_1$ to $b_8$ are shown) arranged in groups $116_1$, $116_2$, in similar manner to that in figure 1. On top of the LCD array 115 is positioned a lenticular array 120 of cylindrical lenses 121, 122. The lenticular array may include any sheet of corrugated optical material, or array of discrete or joined lenses to provide localised focusing for groups of pixels of the LCD panel.

In the arrangement shown in figure 8, the width of each lens element is chosen to be eight pixels, corresponding to an eight-view 3D display. Of course, the width of each lens element may be chosen to correspond to different numbers of pixels according to the angular resolution required. The pixels $a_1$ to $a_8$ of the LCD are imaged into the different views. For example, the light rays emitted from pixels $a_2$ and $a_4$ are shown. One sees that in the LCD substrate 116, the rays emitted by pixel $a_2$ propagate to a large extent obliquely with respect to the rays emitted by pixel $a_4$. The angle between them is, on average, approximately equal to the angle between the two views ($\theta$).

It will be seen that in a lenticular-type 3D display device, the light rays of the different views will still travel to the liquid crystal display panel from a respective discrete light source (not shown) at different angles relative to the plane of the display. Therefore, the problem of intensity dependency on the angle still exists, and is solved by the intensity compensation device 70 as described in connection with figure 7.

it will be recognised that the invention can be applied not only to transmissive display panel types, but also to reflective display panel types. Where the display panel provides for control of reflectivity of each of a plurality of pixels, the dependence of the reflectivity on the angle of the plane of the pixel to the light source will still exist and can be corrected for using the intensity compensation device as described herein.

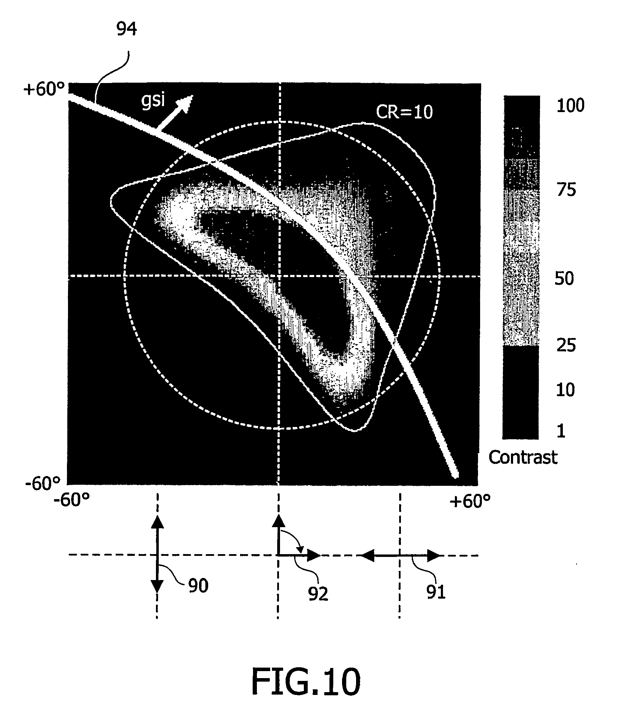

The invention as described above also has important implications for the optimisation of liquid crystal displays generally. The viewing angle dependence of LCD panels is known generally to be rather poor. Figure 10 illustrates how contrast and grey scale inversion depends upon viewing angle for a standard 90 degree twisted nematic (TN) transmissive LCD without compensation foil. The horizontal viewing angle is shown on the x-axis between -60 degrees and +60 degrees from the normal to the plane of the display, and the vertical viewing angle is shown on the y-axis between -60 degrees and +60 degrees from the normal to the plane of the display.

The orientations of the optical axes 90, 91 of the LCD polarisers and the optical axes 92 of the liquid crystal directors are shown in the lower part of the figure.

From figure 10, it is seen that the image quality strongly depends upon viewing angle. For the example shown in figure 10, the optimal viewing angles are represented by the diagonal line 94 running from top left to bottom right, and grey scale inversion occurs for viewing positions to the right and above the line 94.

Conventionally, for most important applications such as televisions and computer monitors, it is recognised that maximising performance for horizontal viewing directions is more important than maximising performance for vertical viewing directions. For example, for television applications, multiple viewers of a display device will normally be arranged with their eye levels more-or-less consistent relative to the screen (i.e. with very little variation along the y-axis), but their horizontal viewing angles relative to the x-axis may vary significantly. Similarly, a user seated at a computer monitor is more likely to vary head position along the x-axis while working, than along the y-axis.

According to convention, therefore, the LCD would be rotated anticlockwise through 45 degrees from the orientation shown in figure 10, such that its polarisation axes are at approximately 45 degrees to the x- and y-axes of the display when in use. In this way, the performance of the display device is optimised for horizontal viewing angles, but is compromised for vertical viewing angles.

3D LCD displays suffer from the same problems with optimisation of viewing angle dependency in respect of x and y directions.

However, in the present invention, it is recognised that optimisation of brightness rendering can be achieved by electronic techniques in driving the display, using the described intensity compensation device 60 and/or 70 as described above.

Therefore, it is more appropriate to provide the display device with an orientation in which the inherent optical characteristics of the display panel are optimised for vertical viewing angle variations. Horizontal viewing angle variations are accommodated for and optimised using the electronic driving techniques as described herein.

Thus, in a preferred arrangement, the 3D display device described above is arranged so that, in normal use, it has the pixels within each group 16 that provide different views as a function of angle to a first axis of the display panel, and has the polarising elements of the display panel oriented so as to minimise viewing angle dependence relative to a second axis of the display, where the second axis is orthogonal to the first axis.

In a most general sense, the inherent optical characteristics of the display panel are such that viewing angle dependence is reduced or substantially minimised relative to the y-axis and the intensity compensation device 60 and/or 70 serves to reduce or substantially minimise viewing angle dependence relative to an axis that is transverse to the y-axis. More preferably, the intensity compensation device 60 and/or 70 serves to reduce or substantially minimise viewing angle dependence relative to an axis that is orthogonal to the y-axis (i.e. the x-axis). In a most preferred device, the x-axis is defined as the horizontal axis when the display is in normal use, and the y-axis is defined as the vertical axis when the display is in normal use.

Other embodiments are intentionally within the scope of the accompanying claims.

**Claims**

1. A display device (101) for displaying a three dimensional image such that different views are displayed according to the viewing angle, the display device including:

   a display panel (15, 53) having a plurality of separately addressable pixels (0...10) for displaying said image, the pixels being grouped such that different pixels in a group (16) correspond to different views of the image, each group of pixels being positioned to receive light from a respective discrete light source, each pixel in a group being positioned relative to the respective discrete light source (14);
   a display driver (52) for controlling an optical characteristic of each pixel to generate an image according to received image data; and
   an intensity compensation device (60, 70) for further controlling said optical characteristic of pixels within a group to compensate for an angular size of view, of the respective light source, via said pixels.

2. The display device of claim 1 further including a back panel (11) for providing a plurality of said discrete light sources (14), each group (16) of pixels in the display panel (15) being positioned to receive light from a respective one of the discrete light sources.

3. The display device of claim 2 in which the back panel (11) provides a plurality of line sources of illumination.

4. The display device of claim 2 in which the back panel (11) provides a plurality of point sources of illumination.

5. The display device of claim 2 in which the display panel (15) is a light-transmissive display panel adapted for viewing from a side opposite to the side on which the back panel (11) is located.

6. The display device of claim 1 further including a lenticular array (120) positioned adjacent to the display panel (115), each lenticle (121, 122) within the array focusing light from selected pixels in the display panel.

7. The display device of claim 6 in which each lenticle (121, 122) within the array (120) is associated with a said group (16) of pixels.

8. The display device of any preceding claim in which the optical characteristic is a light transmission characteristic and the display driver (52) and intensity compensation device (60, 70) are adapted to control the amount of light passing through each pixel according to an image to be displayed.

9. The display device of any preceding claim in which the intensity compensation device (60) comprises a look-up table containing correction values to be applied in respect of each pixel within a group.

10. The display device of claim 9 in which the correction values are selected so as to substantially normalise an intensity displayed by a group of pixels to be independent of viewing angle.

11. The display device of claim 9 in which the look-up table includes substitution values or offset values as a function of viewing angle to be applied to a frame store.

12. The display device of claim 8 in which the intensity compensation device is adapted to adjust a pixel drive voltage and/or current received from the display driver.

13. The display device of claim 12 in which the intensity compensation device provides a voltage and/or current offset to the pixel drive voltage and/or current received from the display driver.

14. The display device of claim 1 in which the intensity compensation device is adapted to further control said optical characteristic of pixels within a group as a function of a linear viewing angle dimension of each pixel.

15. The display device of claim 1 in which the intensity compensation device is adapted to further control said optical characteristic of pixels within a group as a function of an areal viewing angle dimension of each pixel.

16. The display device of claim 1 in which the intensity compensation device is adapted to further control said optical characteristic of pixels within a group as a function of the angle subtended by a linear dimension of a pixel relative to its respective discrete light source.

17. The display device of claim 1 in which the intensity compensation device is adapted to further control said optical characteristic of pixels within a group as a function of the angle subtended by an areal dimension of a pixel relative to its respective discrete light source.

18. The display device of claim 1 in which the intensity compensation device is adapted to further control said optical characteristic of pixels within a group to modulate the optical transmissivity of each pixel according to the function:

$$\frac{\arctan\{[(N + 0.5)p_0 + 0.5 * w] / h\} - \arctan\{[(N - 0.5)p_0 - 0.5 * w] / h\}}{\arctan\{[(n + 0.5)p_0 + 0.5 * w] / h\} - \arctan\{[(n - 0.5)p_0 - 0.5 * w] / h\}}$$

where the group of pixels comprises $(2N + 1)$ pixels, n is the pixel position from the centre of the group of $(2N + 1)$ pixels, $p_0$ is the pixel width, w is the width of the discrete light source, and h is the orthogonal separation of the light source to the plane of the group of pixels.

19. The display device of any preceding claim in which the inherent optical characteristics of the display panel (15, 53) are configured such that viewing angle dependence is reduced or substantially minimised relative to the y-axis and the intensity compensation device (60, 70) serves to reduce or substantially minimise viewing angle dependence relative to an axis that is transverse to the y-axis.

20. The display device of claim 19 in which the intensity compensation device (60, 70) serves to reduce or substantially minimise viewing angle dependence relative to an axis that is orthogonal to the y-axis (i.e. the x-axis).

21. The display device of claim 20 incorporated into an object, in which the x-axis is defined as the horizontal axis when the object is in normal use, and the y-axis is defined as the vertical axis when the object is in normal use.

22. A method for displaying a three dimensional image on a display device (101) such that different views of the image are displayed according to the viewing angle, the method comprising the steps of:

processing image data to form pixel intensity data values for each one of a plurality of separately addressable pixels (0...10) in display panel (15, 53), the pixels being grouped such that different pixels in a group (16) correspond to different views of the image, each group of pixels being positioned to receive light from a respective discrete light source, and each pixel in a group being positioned relative to respective discrete light source (14), the pixel intensity data values each for controlling an optical characteristic of a respective pixel to generate the image;
applying intensity correction values to at least some pixel data values within each group to compensate for an angular size of view, of the respective light source, via said pixels; and
using the corrected pixel data values to drive pixels of the display panel to generate said image.

23. The method of claim 22 in which the optical characteristic is a light transmission characteristic and the intensity correction values applied are adapted to control the amount of light from the respective discrete light source passing through each pixel according to a three dimensional image to be displayed.

24. The method of claim 22 in which the intensity correction values are obtained from a look-up table containing correction values to be applied in respect of each pixel within a group.

25. The method of claim 22 in which the correction values are selected so as to substantially normalise an intensity displayed by a group of pixels to be independent of viewing angle.

26. The method of claim 22 in which the intensity correction values are used to adjust a pixel drive voltage and/or current applied to the display panel.

27. The method of claim 22 in which the intensity correction values are determined according to a function of a linear viewing angle dimension of each pixel in a group.

28. The method of claim 22 in which the intensity correction values are determined according to a function of an areal viewing angle dimension of each pixel in a group.

29. The method of claim 22 in which the intensity correction values are determined according to a function of the angle subtended by a linear dimension of a pixel relative to its respective discrete light source.

30. The method of claim 22 in which the intensity correction values determined according to a function of the angle subtended by an areal dimension of a pixel relative to its respective discrete light source.

31. The method of claim 22 in which the intensity correction values are selected to modulate the optical transmissivity of each pixel according to the function:

$$\frac{\arctan\{[(N + 0.5)p_0 + 0.5 * w] / h\} - \arctan\{[(N - 0.5)p_0 - 0.5 * w] / h\}}{\arctan\{[(n + 0.5)p_0 + 0.5 * w] / h\} - \arctan\{[(n - 0.5)p_0 - 0.5 * w] / h\}}$$

where the group of pixels comprises (2N + 1) pixels, n is the pixel position from the centre of the group of (2N + 1) pixels, $p_0$ is the pixel width, w is the width of the discrete light source, and h is the orthogonal separation of the light source to the plane of the group of pixels.

32. The method of any one of claims 22 to 31 further including the step of configuring the inherent optical characteristics of the display panel (15, 53) such that viewing angle dependence is reduced or substantially minimised relative to the y-axis and applying said intensity correction values so as to reduce or substantially minimise viewing angle dependence relative to an axis that is transverse to the y-axis.

33. The method of claim 32 in which the intensity correction values are applied to reduce or substantially minimise viewing angle dependence relative to an axis that is orthogonal to the y-axis (i.e. the x-axis).

34. The method of claim 33 in which the x-axis is the horizontal axis when the display panel is in normal use, and the y-axis is the vertical axis when the display panel is in normal use.

35. A computer program product, comprising a computer readable medium having thereon computer program code means adapted, when said program is loaded onto a computer, to make the computer execute the procedure of any one of claims 22 to 34.

36. A computer program, distributable by electronic data transmission, comprising computer program code means adapted, when said program is loaded onto a computer, to make the computer execute the procedure of any one of claims 22 to 34.

**Patentansprüche**

1. Anzeigeeinrichtung (101), um ein dreidimensionales Bild so wiederzugeben, dass verschiedene Ansichten gemäß dem Betrachtungswinkel dargestellt werden, wobei die Anzeigeeinrichtung umfasst:

- ein Anzeigepanel (15, 53) mit einer großen Anzahl getrennt adressierbarer Pixel (0...10) zur Darstellung des Bildes, wobei die Pixel so gruppiert sind, dass verschiedene Pixel in einer Gruppe (16) verschiedenen Ansichten des Bildes entsprechen, wobei jede Gruppe von Pixeln so positioniert ist, dass sie Licht von einer jeweiligen diskreten Lichtquelle empfängt, wobei jedes Pixel in einer Gruppe relativ zu der jeweiligen diskreten Lichtquelle (14) positioniert ist,
- einen Anzeigetreiber (52), um eine optische Charakteristik jedes Pixels so zu steuern, dass ein Bild gemäß empfangenen Bilddaten erzeugt wird, sowie
- eine Intensitätsausgleichseinrichtung (60, 70), um die optische

Charakteristik von Pixeln innerhalb einer Gruppe weiterhin so zu steuern, dass eine Winkelgröße der Ansicht der jeweiligen Lichtquelle über die Pixel ausgeglichen wird.

2. Anzeigeeinrichtung nach Anspruch 1, welche weiterhin ein hinteres Panel (11) aufweist, um mehrere der diskreten Lichtquellen (14) vorzusehen, wobei jede Gruppe (16) von Pixeln in dem Anzeigepanel (15) so positioniert ist, dass sie Licht von einer jeweiligen diskreten Lichtquelle empfängt.

3. Anzeigeeinrichtung nach Anspruch 2, wobei das hintere Panel (11) mehrere Linienlichtquellen vorsieht.

4. Anzeigeeinrichtung nach Anspruch 2, wobei das hintere Panel (11) mehrere Punktlichtquellen vorsieht.

5. Anzeigeeinrichtung nach Anspruch 2, wobei das Anzeigepanel (15) ein lichtdurchlässiges Anzeigepanel ist, welches von einer Seite, die der Seite, auf der sich das hintere Panel (11) befindet, gegenüberliegt, betrachtet werden kann.

6. Anzeigeeinrichtung nach Anspruch 1, die weiterhin ein lentikulares Array (120) umfasst, welches in Angrenzung an das Anzeigepanel (115) angeordnet ist, wobei jede Linse (121, 122) innerhalb des Arrays Licht von ausgewählten Pixeln in dem Anzeigepanel fokussiert.

7. Anzeigeeinrichtung nach Anspruch 6, wobei jede Linse (121, 122) innerhalb des Arrays (120) einer Gruppe (16) von Pixeln zugeordnet ist.

8. Anzeigeeinrichtung nach einem der vorangegangenen Ansprüche, wobei die optische Charakteristik eine Lichttransmissionscharakteristik ist und der Anzeigetreiber (52) und die Intensitätsausgleichseinrichtung (60, 70) die durch jedes Pixel hindurchgehende Lichtmenge gemäß einem darzustellenden Bild steuern können.

9. Anzeigeeinrichtung nach einem der vorangegangenen Ansprüche, wobei die Intensitätsausgleichseinrichtung (60) eine Verweistabelle aufweist, die in Bezug auf jedes Pixel innerhalb einer Gruppe anzuwendende Korrekturwerte enthält.

10. Anzeigeeinrichtung nach Anspruch 9, wobei die Korrekturwerte so ausgewählt werden, dass sie eine durch eine Gruppe von Pixeln dargestellte Intensität im Wesentlichen so normieren, dass diese betrachtungswinkelunabhängig ist.

11. Anzeigeeinrichtung nach Anspruch nach Anspruch 9, wobei die Verweistabelle Substitutionswerte oder Versatzwerte als eine Funktion des Betrachtungswinkels enthält, die einem Frame-Speicher zuzuführen sind.

12. Anzeigeeinrichtung nach Anspruch 8, wobei die Intensitätsausgleichseinrichtung eine von dem Anzeigetreiber erhaltene Pixelsteuerspannung und/oder -strom einstellen kann.

13. Anzeigeeinrichtung nach Anspruch 12, wobei die Intensitätsausgleichseinrichtung eine zu der von dem Anzeigetreiber erhaltene Pixelsteuerspannung und/oder -strom verschobene Spannung und/oder Strom abgibt.

14. Anzeigeeinrichtung nach Anspruch 1, wobei die Intensitätsausgleichseinrichtung weiterhin die optische Charakteristik von Pixeln innerhalb einer Gruppe als eine Funktion einer linearen Betrachtungswinkeldimension jedes Pixels steuern kann.

15. Anzeigeeinrichtung nach Anspruch 1, wobei die Intensitätsausgleichseinrichtung weiterhin die optische Charakteristik von Pixeln innerhalb einer Gruppe als eine Funktion einer arealen Betrachtungswinkeldimension jedes Pixels steuern kann.

16. Anzeigeeinrichtung nach Anspruch 1, wobei die Intensitätsausgleichseinrichtung weiterhin die optische Charakteristik von Pixeln innerhalb einer Gruppe als eine Funktion des durch eine lineare Dimension eines Pixels relativ zu dessen jeweiliger diskreten Lichtquelle begrenzten Winkels steuern kann.

17. Anzeigeeinrichtung nach Anspruch 1, wobei die Intensitätsausgleichseinrichtung weiterhin die optische Charakteristik von Pixeln innerhalb einer Gruppe als eine Funktion des durch eine areale Dimension eines Pixels relativ zu dessen jeweiliger diskreten Lichtquelle begrenzten Winkels steuern kann.

18. Anzeigeeinrichtung nach Anspruch 1, wobei die Intensitätsausgleichseinrichtung weiterhin die optische Charakteristik von Pixeln innerhalb einer Gruppe steuern kann, um die optische Durchlässigkeit jedes Pixels gemäß der Funktion

$$\text{arctan}\{ [(N + 0,5) \, p_0 + 0,5 * w] / h\} - \text{arctan}\{ [(N - 0,5) \, p_0 - 0,5 * w] / h\}$$

$$\text{arctan}\{ [(n + 0,5) \, p_0 + 0,5 * w] / h\} - \text{arctan}\{ [(n - 0,5) \, p_0 - 0,5 * w] / h\}$$

zu modulieren, wobei die Gruppe von Pixeln (2N + 1) Pixel aufweist, wobei n die Pixelposition von dem Mittelpunkt der Gruppe von (2N + 1) Pixeln, $p_0$ die Pixelbreite, w die Breite der diskreten Lichtquelle und h die orthogonale Trennung der Lichtquelle zu der Ebene der Gruppe von Pixeln darstellen.

19. Anzeigeeinrichtung nach einem der vorangegangenen Ansprüche, wobei die inhärenten, optischen Charakteristiken des Anzeigepanels (15, 53) so konfiguriert sind, dass die Betrachtungswinkelabhängigkeit relativ zu der y-Achse reduziert oder wesentlich minimiert wird und die Intensitätsausgleichseinrichtung (50, 70) dazu dient, die Betrachtungswinkelabhängigkeit relativ zu einer Achse, die sich quer zu der y-Achse erstreckt, zu reduzieren oder wesentlich zu minimieren.

20. Anzeigeeinrichtung nach Anspruch 19, wobei die Intensitätsausgleichseinrichtung (60, 70) dazu dient, die Betrachtungswinkelabhängigkeit relativ zu einer Achse, die orthogonal zu der y-Achse verläuft (d.h. die x-Achse), zu reduzieren oder wesentlich zu minimieren.

21. Anzeigeeinrichtung nach Anspruch 20, die in ein Objekt integriert ist, wobei die x-Achse bei normaler Benutzung des Objekts als die horizontale Achse und die y-Achse bei normaler Benutzung des Objekts als die vertikale Achse definiert ist.

22. Verfahren, um ein dreidimensionales Bild auf einer Anzeigeeinrichtung (101) so darzustellen, dass verschiedene Ansichten des Bildes gemäß dem Betrachtungswinkel dargestellt werden, wobei das Verfahren die folgenden Schritte umfasst:

- Verarbeitung von Bilddaten, um für jedes einer Vielzahl von getrennt adressierbaren Pixeln (0...10) in Anzeigepanel (15, 53) Pixelintensitätsdatenwerte vorzusehen, wobei die Pixel so gruppiert sind, dass verschiedene Pixel in einer Gruppe (16) verschiedenen Ansichten des Bildes entsprechen, wobei jede Gruppe von Pixeln so positioniert ist, dass sie Licht von einer jeweiligen diskreten Lichtquelle empfängt und jedes Pixel in einer Gruppe relativ zu der jeweiligen diskreten Lichtquelle (14) positioniert ist, wobei die Pixelintensitätsdatenwerte jeweils dazu dienen, eine optische Charakteristik eines jeweiligen Pixels so zu steuern, dass das Bild erzeugt wird;
- Anwendung von Intensitätskorrekturwerten auf zumindest einige Pixeldatenwerte innerhalb jeder Gruppe, um eine Winkelgröße der Ansicht der jeweiligen Lichtquelle über die Pixel auszugleichen; sowie
- Verwendung der korrigierten Pixeldatenwerte, um Pixel des Anzeigepanels zwecks Erzeugung des Bildes anzusteuern.

23. Verfahren nach Anspruch 20, wobei die optische Charakteristik eine Lichttransmissionscharakteristik ist und die angewandten Intensitätskorrekturwerte die Menge des durch jedes Pixel hindurchgehenden Lichts von der jeweiligen diskreten Lichtquelle gemäß einem darzustellenden, dreidimensionalen Bildes steuern können.

24. Verfahren nach Anspruch 22, wobei die Intensitätskorrekturwerte von einer Verweistabelle erhalten werden, welche, im Hinblick auf jedes Pixel innerhalb einer Gruppe anzuwendende Korrekturwerte enthält.

25. Verfahren nach Anspruch 22, wobei die Korrekturwerte so ausgewählt werden, dass sie eine durch eine Gruppe von Pixeln dargestellte Intensität im Wesentlichen so normieren, dass diese betrachtungswinkelunabhängig ist.

26. Verfahren nach Anspruch 22, wobei die Intensitätskorrekturwerte eingesetzt werden, um eine dem Anzeigepanel zugeführte Pixelsteuerspannung und/oder -strom einzustellen.

27. Verfahren nach Anspruch 22, wobei die Intensitätskorrekturwerte gemäß einer Funktion einer linearen Betrachtungswinkeldimension jedes Pixels in einer Gruppe bestimmt werden.

28. Verfahren nach Anspruch 22, wobei die Intensitätskorrekturwerte gemäß einer Funktion einer arealen Betrachtungswinkeldimension jedes Pixels in einer Gruppe bestimmt werden.

**29.** Verfahren nach Anspruch 22, wobei die Intensitätskorrekturwerte gemäß einer Funktion des von einer linearen Dimension eines Pixels relativ zu seiner jeweiligen diskreten Lichtquelle begrenzten Winkels bestimmt werden.

**30.** Verfahren nach Anspruch 22, wobei die Intensitätskorrekturwerte gemäß einer Funktion des von einer arealen Dimension eines Pixels relativ zu seiner jeweiligen diskreten Lichtquelle begrenzten Winkels bestimmt werden.

**31.** Verfahren nach Anspruch 22, wobei die Intensitätskorrekturwerte so ausgewählt werden, dass die optische Durchlässigkeit jedes Pixels gemäß der Funktion

$$\frac{\arctan\{[(N + 0,5)\, p_0 + 0,5 * w]\,/\,h\} - \arctan\{[(N - 0,5)\, p_0 - 0,5 * w]\,/\,h\}}{\arctan\{[(n + 0,5)\, p_0 + 0,5 * w]\,/\,h\} - \arctan\{[(n - 0,5)\, p_0 - 0,5 * w]\,/\,h\}}$$

moduliert wird, wobei die Gruppe von Pixeln (2N + 1) Pixel aufweist, wobei n die Pixelposition von dem Mittelpunkt der Gruppe von (2N + 1) Pixeln, $p_0$ die Pixelbreite, w die Breite der diskreten Lichtquelle und h die orthogonale Trennung der Lichtquelle zu der Ebene der Gruppe von Pixeln darstellen.

**32.** Verfahren nach einem der Ansprüche 22 bis 31, welches weiterhin den Schritt des Konfigurierens der inhärenten, optischen Charakteristiken des Anzeigepanels (15, 53) dahingehend umfasst, dass Betrachtungswinkelabhängigkeit relativ zu der y-Achse reduziert oder wesentlich minimiert wird und die Intensitätskorrekturwerte so angewendet werden, dass sie Betrachtungswinkelabhängigkeit relativ zu einer Achse, die sich quer zu der y-Achse erstreckt, reduzieren oder wesentlich minimieren.

**33.** Verfahren nach Anspruch 32, wobei die Intensitätskorrekturwerte verwendet werden, um Betrachtungswinkelabhängigkeit relativ zu einer Achse, die orthogonal zu der y-Achse verläuft (d.h. die x-Achse), zu reduzieren oder wesentlich zu minimieren.

**34.** Verfahren nach Anspruch 33, wobei die x-Achse bei normaler Benutzung des Anzeigepanels die horizontale Achse und die y-Achse bei normaler Benutzung des Anzeigepanels die vertikale Achse ist.

**35.** Computerprogrammprodukt mit einem computerlesbaren Medium, auf dem Computerprogrammcodemittel vorgesehen sind, die so adaptiert sind, dass sie bewirken, dass bei Laden des Programms auf einen Computer dieser die Prozedur nach einem der Ansprüche 22 bis 34 ausführen kann.

**36.** Computerprogramm, durch elektronische Datenübertragung verteilbar, mit Computerprogrammcodemitteln, die so adaptiert sind, dass sie bewirken, dass bei Laden des Programms auf einen Computer dieser die Prozedur nach einem der Ansprüche 22 bis 34 ausführen kann.

**Revendications**

**1.** Dispositif d'affichage (101) pour afficher une image tridimensionnelle de sorte que des vues différentes sont affichées selon l'angle de vision, le dispositif d'affichage incluant :

un panneau d'affichage (15, 53) comportant une pluralité de pixels pouvant être adressés séparément (0... 10) pour afficher ladite image, les pixels étant groupés de sorte que des pixels différents dans un groupe (16) correspondent à des vues différentes de l'image, chaque groupe de pixels étant placé pour recevoir de la lumière d'une source de lumière discrète respective, chaque pixel dans un groupe étant placé par rapport à la source de lumière discrète (14) respective ;
un circuit d'attaque d'affichage (52) pour commander une caractéristique optique de chaque pixel pour générer une image selon des données d'image reçues, et
un dispositif de compensation d'intensité (60, 70) pour commander plus précisément ladite caractéristique optique de pixels dans un groupe pour compenser une taille angulaire de vue, de la source de lumière respective, par le biais desdits pixels.

**2.** Dispositif d'affichage suivant la revendication 1 incluant en outre un panneau arrière (11) pour fournir une pluralité desdites sources de lumière discrètes (14), chaque groupe (16) de pixels dans le panneau afficheur (15) étant placé pour recevoir de la lumière d'une source respective parmi les sources de lumière discrètes.

**3.** Dispositif d'affichage suivant la revendication 2 dans lequel le panneau arrière (11) fournit une pluralité de sources linéaires d'éclairement.

**4.** Dispositif d'affichage suivant la revendication 2 dans lequel le panneau arrière (11) fournit une pluralité de sources ponctuelles d'éclairement.

**5.** Dispositif d'affichage suivant la revendication 2 dans lequel le panneau afficheur (15) est un panneau afficheur à transmission de lumière adapté pour voir depuis un côté opposé au côté sur lequel le panneau arrière (11) se trouve.

**6.** Dispositif d'affichage suivant la revendication 1 incluant en outre un réseau lenticulaire (120) placé à côté du panneau afficheur (115), chaque lentille (121, 122) du réseau focalisant la lumière venant de pixels sélectionnés dans le panneau afficheur.

**7.** Dispositif d'affichage suivant la revendication 6 dans lequel chaque lentille (121, 122) du réseau (120) est associée à un dit groupe (16) de pixels.

**8.** Dispositif d'affichage suivant l'une quelconque des revendications précédentes dans lequel la caractéristique optique est une caractéristique de transmission de la lumière et le circuit d'attaque d'affichage (52) et le dispositif de compensation d'intensité (60, 70) sont à même de commander la quantité de lumière traversant chaque pixel en fonction d'une image qui doit être affichée.

**9.** Dispositif d'affichage suivant l'une quelconque des revendications précédentes dans lequel le dispositif de compensation d'intensité (60) comprend une table à consulter contenant des valeurs de correction à appliquer par rapport à chaque pixel dans un groupe.

**10.** Dispositif d'affichage suivant la revendication 9 dans lequel les valeurs de correction sont sélectionnées de manière à normaliser en grande partie une intensité affichée par un groupe de pixels qui doit être indépendante de l'angle de vision.

**11.** Dispositif d'affichage suivant la revendication 9 dans lequel la table à consulter inclut des valeurs de substitution ou des valeurs de décalage en fonction de l'angle de vision à appliquer à une mémoire d'images.

**12.** Dispositif d'affichage suivant la revendication 8 dans lequel le dispositif de compensation d'intensité est à même de régler un courant et/ou une tension d'attaque de pixel reçus du circuit d'attaque d'affichage.

**13.** Dispositif d'affichage suivant la revendication 12 dans lequel le dispositif de compensation d'intensité fournit un courant et/ou une tension de décalage au courant et/ou à la tension d'attaque de pixel reçus du circuit d'attaque d'afficheur.

**14.** Dispositif d'affichage suivant la revendication 1 dans lequel le dispositif de compensation d'intensité est à même de commander plus précisément ladite caractéristique optique de pixels dans un groupe en fonction d'une dimension d'angle de vision linéaire de chaque pixel.

**15.** Dispositif d'affichage suivant la revendication 1 dans lequel le dispositif de compensation d'intensité est à même de commander plus précisément ladite caractéristique optique de pixels dans un groupe en fonction d'une dimension d'angle de vision surfacique de chaque pixel.

**16.** Dispositif d'affichage suivant la revendication 1 dans lequel le dispositif de compensation d'intensité est à même de commander plus précisément ladite caractéristique optique de pixels dans un groupe en fonction de l'angle sous-tendu par une dimension linéaire d'un pixel par rapport à sa source de lumière discrète respective.

**17.** Dispositif d'affichage suivant la revendication 1 dans lequel le dispositif de compensation d'intensité est à même de commander plus précisément ladite caractéristique optique de pixels dans un groupe en fonction de l'angle sous-tendu par une dimension surfacique d'un pixel par rapport à sa source de lumière discrète respective.

**18.** Dispositif d'affichage suivant la revendication 1 dans lequel le dispositif de compensation d'intensité est à même de commander plus précisément ladite caractéristique optique de pixels dans un groupe pour moduler la transmissivité optique de chaque pixel selon la fonction :

$$\frac{\arctan\left\{\left[(N+0,5)\, p_0 + 0,5*w\right]/h\right\} - \arctan\left\{\left[(N-0,5)\, p_0 - 0,5*w\right]/h\right\}}{\arctan\left\{\left[(n+0,5)\, p_0 + 0,5*w\right]/h\right\} - \arctan\left\{\left[(n-0,5)\, p_0 - 0,5*w\right]/h\right\}}$$

où le groupe de pixels comprend (2N + 1) pixels, n est la position des pixels par rapport au centre du groupe de (2N + 1) pixels, $p_0$ est la largeur des pixels, w est la largeur de la source de lumière discrète et h est la séparation orthogonale de la source de lumière par rapport au plan du groupe de pixels.

**19.** Dispositif d'affichage suivant l'une quelconque des revendications précédentes dans lequel les caractéristiques optiques inhérentes du panneau afficheur (15, 53) sont configurées de sorte que la dépendance à l'angle de vision est réduite ou considérablement limitée par rapport à l'axe y et le dispositif de compensation d'intensité (60, 70) sert à réduire ou à considérablement limiter la dépendance à l'angle de vision par rapport à un axe qui est transversal à l'axe y.

**20.** Dispositif d'affichage suivant la revendication 19 dans lequel le dispositif de compensation d'intensité (60, 70) sert à réduire ou à considérablement limiter la dépendance à l'angle de vision par rapport à un axe qui est orthogonal à l'axe y (c'est-à-dire l'axe x).

**21.** Dispositif d'affichage suivant la revendication 20 incorporé dans un objet, dans lequel l'axe x est défini comme l'axe horizontal lorsque l'objet fonctionne normalement, et l'axe y est défini comme l'axe vertical lorsque l'objet fonctionne normalement.

**22.** Procédé pour afficher une image tridimensionnelle sur un dispositif d'affichage (101) de sorte que des vues différentes de l'image sont affichées selon l'angle de vision, le procédé comprenant les étapes suivantes :

le traitement de données d'image pour former des valeurs de données d'intensité de pixel pour chacun d'une pluralité de pixels pouvant être adressés séparément (0... 10) dans un panneau afficheur (15, 53), les pixels étant groupés de sorte que des pixels différents dans un groupe (16) correspondent à des vues différentes de l'image, chaque groupe de pixels étant placé pour recevoir de la lumière d'une source de lumière discrète respective, et chaque pixel dans un groupe étant placé par rapport à la source de lumière discrète (14) respective, chacune des valeurs de données d'intensité de pixel servant à commander une caractéristique optique d'un pixel respectif pour générer l'image ;
l'application de valeurs de correction d'intensité à au moins quelques valeurs de données de pixel dans chaque groupe pour compenser une taille angulaire de vue, de la source de lumière respective, par le biais desdits pixels, et
l'utilisation des valeurs de données de pixel corrigées pour attaquer des pixels du panneau d'affichage pour générer ladite image.

**23.** Procédé suivant la revendication 22 dans lequel la caractéristique optique est une caractéristique de transmission de lumière et les valeurs de correction d'intensité appliquées sont à même de commander la quantité de lumière venant de la source de lumière discrète respective traversant chaque pixel en fonction d'une image tridimensionnelle à afficher.

**24.** Procédé suivant la revendication 22 dans lequel les valeurs de correction d'intensité sont obtenues d'une table à consulter contenant des valeurs de correction à appliquer par rapport à chaque pixel dans un groupe.

**25.** Procédé suivant la revendication 22 dans lequel les valeurs de correction sont sélectionnées de manière à normaliser en grande partie une intensité affichée par un groupe de pixels qui doit être indépendante de l'angle de vision.

**26.** Procédé suivant la revendication 22 dans lequel les valeurs de correction d'intensité sont utilisées pour régler un courant et/ou une tension d'attaque de pixel appliqués au panneau afficheur.

**27.** Procédé suivant la revendication 22 dans lequel les valeurs de correction d'intensité sont déterminées selon une fonction d'une dimension d'angle de vision linéaire de chaque pixel dans un groupe.

**28.** Procédé suivant la revendication 22 dans lequel les valeurs de correction d'intensité sont déterminées selon une fonction d'une dimension d'angle de vision surfaçique de chaque pixel dans un groupe.

**29.** Procédé suivant la revendication 22 dans lequel les valeurs de correction d'intensité sont déterminées selon une fonction de l'angle sous-tendu par une dimension linéaire d'un pixel par rapport à sa source de lumière discrète respective.

**30.** Procédé suivant la revendication 22 dans lequel les valeurs de correction d'intensité sont déterminées selon une fonction de l'angle sous-tendu par une dimension surfaçique d'un pixel par rapport à sa source de lumière discrète respective.

**31.** Procédé suivant la revendication 22 dans lequel les valeurs de correction d'intensité sont sélectionnées pour moduler la transmissivité optique de chaque pixel selon la fonction :

$$\frac{\arctan\left\{\left[(N+0{,}5)\,p_0+0{,}5*w\right]/h\right\}-\arctan\left\{\left[(N-0{,}5)\,p_0-0{,}5*w\right]/h\right\}}{\arctan\left\{\left[(n+0{,}5)\,p_0+0{,}5*w\right]/h\right\}-\arctan\left\{\left[(n-0{,}5)\,p_0-0{,}5*w\right]/h\right\}}$$

où le groupe de pixels comprend (2N + 1) pixels, n est la position des pixels par rapport au centre du groupe de (2N + 1) pixels, $p_0$ est la largeur des pixels, w est la largeur de la source de lumière discrète et h est la séparation orthogonale de la source de lumière par rapport au plan du groupe de pixels.

**32.** Procédé suivant l'une quelconque des revendications 22 à 31 incluant en outre l'étape de configuration des caractéristiques optiques inhérentes du panneau afficheur (15, 53) de sorte que la dépendance à l'angle de vision est réduite ou considérablement limitée par rapport à l'axe y et d'application desdites valeurs de correction d'intensité de manière à réduire ou à considérablement limiter la dépendance à l'angle de vision par rapport à un axe qui est transversal par rapport à l'axe y.

**33.** Procédé suivant la revendication 32 dans lequel les valeurs de correction d'intensité sont appliquées pour réduire ou considérablement limiter la dépendance à l'angle de vision par rapport à un axe qui est orthogonal à l'axe y (c'est-à-dire l'axe x).

**34.** Procédé suivant la revendication 33 dans lequel l'axe x est l'axe horizontal lorsque le panneau afficheur fonctionne normalement, et l'axe y est l'axe vertical lorsque le panneau afficheur fonctionne normalement.

**35.** Produit formant programme informatique, comprenant un support lisible par ordinateur sur lequel se trouvent des moyens formant code de programme informatique à même, lorsque ledit programme est chargé sur un ordinateur, d'amener l'ordinateur à exécuter la procédure suivant l'une quelconque des revendications 22 à 34.

**36.** Programme informatique, pouvant être distribué par transmission de données électronique, comprenant des moyens formant code de programme informatique à même, lorsque ledit programme est chargé sur un ordinateur, d'amener l'ordinateur à exécuter la procédure suivant l'une quelconque des revendications 22 à 34.

100

LCD
(pixels 1,2,3,....)

Barrier layer with openings

Backlight

$V_{-2}$ $V_{-1}$ $V_0$ $V_1$ $V_2$

1 2 3 4 5 6 7 8 9 10

a

14a 14b 14c 14d

13

12

$16_1$ $16_2$ $16_3$

15

11

## FIG. 1

FIG. 2

# FIG. 3

# FIG. 4

**FIG. 5**

**FIG. 6**

IMAGE DATA in $\phi_1$, $\phi_2$....

101

50

IMAGE
PROCESSOR

INTENSITY
COMPENSATION
DEVICE

$\phi_1$ — 61
$\phi_2$ — 62
$\phi_3$ — 63

64

58  58

FRAME STORE

51

DISPLAY
DRIVER — 52

INTENSITY
COMPENSATION
DEVICE — 70

DISPLAY — 53

# FIG. 7

FIG. 8

80

75

LCD

73    Localized light spots

Lens array

71

Conventional backlight

72

# FIG. 9

FIG.10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6172807 B